# EUROPÄISCHE PATENTSCHRIFT

(11) **EP 3 665 619 B1**
(45) Veröffentlichungstag und Bekanntmachung des Hinweises auf die Patenterteilung: **16.09.2020**
(21) Anmeldenummer: 19752433.3
(22) Anmeldetag: 29.07.2019
(51) Int. Cl.: G06K 9/00, G10L 13/08, G01C 21/36

(54) **VERFAHREN ZUM ERZEUGEN EINER SPRACHANSAGE ALS RÜCKMELDUNG ZU EINER HANDSCHRIFTLICHEN NUTZEREINGABE SOWIE ENTSPRECHENDE BEDIENVORRICHTUNG UND KRAFTFAHRZEUG**
METHOD AND DEVICE FOR GENERATING VOCAL ANNOUNCEMENTS BASED ON HANDWRITTEN USER INPUT AND VEHICLE COMPRISING SAID DEVICE
PROCÉDÉ ET DISPOSITIF DE GENERATION D'ANNONCES VOCAL SUR LA BASE D'UNE ENTRÉE UTILISATEUR MANUSCRITE

(30) Priorität: 13.08.2018 DE 102018213602
(43) Veröffentlichungstag der Anmeldung: 17.06.2020
(73) Patentinhaber: Audi AG, 85045 Ingolstadt (DE)
(72) Erfinder: DUSIK, Jan, 85055 Ingolstadt (DE)
(86) Internationale Anmeldenummer: PCT/EP2019/070336
(87) Internationale Veröffentlichungsnummer: WO 2020/035297

(56) Entgegenhaltungen:
- DE-A1-102005 031 656
- DE-A1-102007 028 235
- DE-A1-102012 217 160
- US-A- 6 076 060

## Beschreibung

Die Erfindung betrifft ein Verfahren zum Erzeugen einer Sprachansage als Rückmeldung zu einer handschriftlichen Nutzereingabe, die ein Benutzer an einer Bedienvorrichtung eingibt. Die Erfindung umfasst auch die besagte Bedienvorrichtung sowie ein Kraftfahrzeug mit einer solchen Bedienvorrichtung.

In einem Kraftfahrzeug oder einem anderen Gerät, beispielsweise einem Smartphone oder einem Tablet-PC, kann eine Eingabeeinrichtung bereitgestellt sein, über welche ein Benutzer eine handschriftliche Nutzereingabe eingeben kann. Eine solche handschriftliche Nutzereingabe kann beispielsweise ein mit Handschrift geschriebener Text oder ein mit Handschrift geschriebenes Wort sein. Damit der Benutzer überprüfen oder erkennen kann, ob seine handschriftliche Nutzereingabe korrekt von der Bedienvorrichtung erkannt wurde, kann vorgesehen sein, ein handschriftlich eingegebenes Wort zunächst in der bekannten Weise mittels einer Handschrifterkennungssoftware erkennen zu lassen, wodurch das Wort als Buchstabentext vorliegt, und dann das erkannte Wort mittels einer Sprachsynthese (TTS - Text to Speech) als Sprachansage auszugeben. Der Benutzer bekommt dann eine verbale oder akustische Rückmeldung und kann daran überprüfen, ob seine handschriftliche Nutzereingabe korrekt erkannt wurde.

Möchte also ein Benutzer in einem Kraftfahrzeug beispielsweise das Wort "Berlin" als Zieladresse in eine Navigationsassistenz eingeben, so kann er dies unter anderem über einen Touchscreen (Berührungsbildschirm) tun. Er kann hierzu die handschriftliche Nutzereingabe durchführen, indem er mit einem Finger oder einem Eingabeobjekt (z.B. einem sogenannten Stylus) auf dem Touchscreen schreibt. Es kann dann diese handschriftliche Nutzereingabe akustisch als Sprachansage mittels einer Sprachsyntheseeinrichtung ausgegeben und somit bestätigt werden. Dies kann entweder erfolgen, indem die Nutzereingabe buchstabiert wird (in dem Beispiel also "B E R L I N") oder als Ganzwort vorgelesen wird.

Eine Sprachansage mittels Buchstabierung ist kognitiv potentiell ungünstiger für einen Benutzer, weil bei einem längeren Wort die Orientierung verlorengeht. Daher ist man daran interessiert, insbesondere einen Fahrer während einer Fahrt in einem Kraftfahrzeug dadurch möglichst wenig abzulenken, dass die Bestätigung oder Sprachansage zur handschriftlichen Nutzereingabe in natürlicher Form, also als vorgelesenes Ganzwort (in dem Beispiel also "Berlin") durchgeführt wird.

Hierbei ergibt sich aber das Problem, dass ein Benutzer die handschriftliche Nutzereingabe durch eine Eingabepause unterbrechen kann. Er kann also beispielsweise während des Schreibens eines Worts innehalten oder absetzen. Während einer Fahrt eines Kraftfahrzeugs kann dieses beispielsweise erforderlich sein, um ein Fahrmanöver durchzuführen. Es liegt dann also eine unvollständige handschriftliche Nutzereingabe vor, in welcher ein unvollständig geschriebenes Wort steht, also für das Wort "Berlin" beispielsweise "Berl". Das Problem, das hierbei entstehen kann, besteht darin, dass für die Sprachansage zu einem Wort stets eine klangliche oder phonetische Transkription notwendig ist, die angibt, welche Lautfolgen durch die Sprachansage auszugeben sind, um das jeweilige Wort klanglich oder sprachlich wiederzugeben. Eine solche Transkription kann auf einem phonetischen Alphabet oder einer Lautschrift basieren. Ein Beispiel ist das internationale phonetische Alphabet IPA. Für vollständige Wörter kann beispielsweise im Falle von Ortsnamen eine Datenbank eines Navigationssystems genutzt werden, aus welchem die Transkription für Straßennamen und/oder Ortsnamen entnommen werden kann. In dem obigen Beispiel ist also eine phonetische Transkription zu dem Ganzwort "Berlin" verfügbar. Es wird in einer solchen Datenbank also das erkannte, handschriftlich eingegebene Wort gesucht und zu dem Wort dann die Transkription aus der Datenbank ausgelesen. Liegt allerdings nur ein teilweise geschriebenes Wort, das heißt also ein Teilwort vor, so wird die Datenbanksuche nicht fündig, da zu diesem Teilwort kein Datenbankeintrag existiert. Eine Teiladresse kann also nicht aufgelöst werden, weil das Ganzwort fehlt, wie es in der Datenbank eingetragen ist. Dasselbe kann auch für eine Adresseingabe aus mehreren Wörtern geschehen (z.B. "Champs Elysees"), wenn die handschriftliche Nutzereingabe zunächst nur eines der Wörter angibt. Dann kann es zu einem mehrdeutigen Suchergebnis in der Datenbank kommen.

Zudem ist ein Durchsuchen einer solchen Datenbank sehr rechenintensiv, weshalb für eine wiederholte Suche zu jeder Teileingabe oder jedem eingegebenen Teilwort (also z.B. nach jedem neu eingegebenen Buchstaben) eine Rechenlast in der Navigationsdatenbank verursachen würde, die unerwünscht ist.

In der DE 10 2012 217 160 A1 ist ein Sprachsynthesesystem beschrieben, das zur Ermittlung geeigneter Laute während der Sprachsynthese ausgebildet ist. Die Ausgabequalität kann hierbei iterativ verbessert werden. Hierbei wird in einer Synthesemaschine auf bereits aufgenommene Spracheinheiten gesprochener Sprache zurückgegriffen. Um also Teilwort korrekt auszusprechen oder überhaupt auffindbar zu machen, müssten entsprechend viele Sprachaufnahmen, also in dem Beispiel nicht nur von "Berlin", sondern auch von "Berl" vorhanden sein. Dies würde sehr viel Datenspeicher benötigen.

Aus der DE 600 12 655 T2 ist eine Audiowiedergabe für geschriebene Dokumente bekannt. Auch diese Audiowiedergabe nutzt vorgefertigte Audioschnipsel zur Erzeugung der Sprache und erzeugt neue Audioschnipsel, wenn kein passender Audioschnipsel gefunden wird. Hierzu wird ein auszusprechendes Wort in Bestandteile seiner Phomene zerlegt und daraufhin auf der Grundlage einer Wahrscheinlichkeitsbetrachtung die wahrscheinlichste Aussprache ermittelt. Hierbei kann es zu einem Fehler kommen.

Aus der DE 10 2012 006 714 A1 ist ein Verfahren zur Ausgabe von Informationen aus einer Fahrzeug-Bedienungsanleitung bekannt. Die Bedienungsanleitung kann in Sprache umgewandelt werden, um eine Text-to-Speech-Einrichtung zu betreiben. Es kann hierbei aber nur eine fertig geschriebene Bedienungsanleitung als Sprachansage ausgegeben werden.

Aus der DE 10 2005 021 526 A1 ist ein Verfahren zum Eingeben von Schriftzeichen in eine Datenverarbeitungsanlage bekannt. Mit einer Sensoreinrichtung wird eine Mehrzahl von Handschriftelementen nacheinander erfasst, von denen jedes einen Satz, bestehend zumindest aus einem Schriftzeichen, repräsentiert. Mit einer Erkennungseinrichtung werden die jeweiligen Sätze von Schriftzeichen aus den erfassten Handschriftelementen ermittelt, um anhand der ermittelten Sätze von Schriftzeichen eine Zeichenfolge in der Reihenfolge des Erfassens der den Sätzen zugeordneten Handschriftelementen zu bilden. Eine akustische Ausgabeeinrichtung gibt die ermittelten Sätze von Schriftzeichen in der Reihenfolge des Erfassens der diesen zugeordneten Handschriftelementen aus.

Aus der US 2006/0210173 A1 ist ein Verfahren zur Bereitstellung von Anhaltspunkten zur Handschrifterkennung bekannt. Die Anhaltspunkte können mit einer Datenbank mit bekannten Werten oder erwarteten Zeichentypen verbunden sein. Sie minimieren die Liste möglicher Textwerte von Feldern, welche Erkennungsvorrichtungen benutzen, um Handschriften zu erkennen, so dass weniger Möglichkeiten auf Übereinstimmung geprüft werden müssen und die Wahrscheinlichkeit einer zutreffenden Erkennung steigt.

Aus der US 6076060 ist eine Übersetzung von Graphemen zu Phonemen, basierend auf einer Teilworterkennung bzw. Segmentierung von Wörtern in Prefixe (Wortanfang), Infixe (Wortmitte) und Suffixe (Wortende) bekannt, wobei die Segmentierung eines Wortes sowohl von links-nach-rechts als auch von rechts-nach-links erfolgt und für die jeweiligen Segmente (Teilwörter) individuelle Graphem-zu-Phoneme-Übersetzungsregeln angewendet werden.

Der Erfindung liegt die Aufgabe zugrunde, als Rückmeldung auch dann eine Sprachansage erzeugen zu können, wenn die auszugebende handschriftliche Nutzereingabe eines Benutzers nur ein Teilwort enthält, also kein vollständig ausgeschriebenes Wort oder Ganzwort.

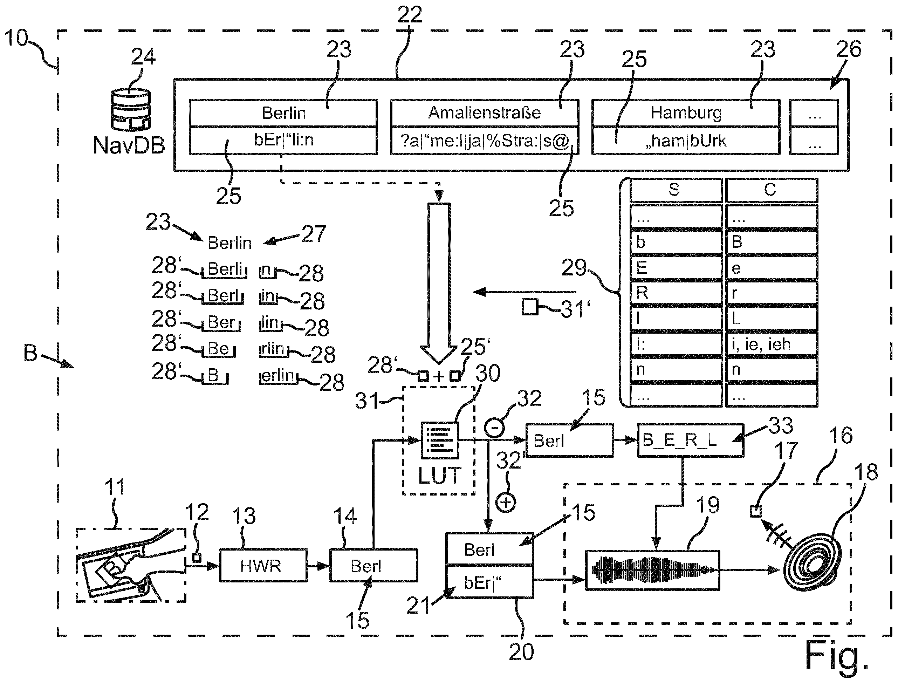

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figur beschrieben.

Durch die Erfindung ist ein Verfahren zum Erzeugen einer Sprachansage als Rückmeldung zu einer handschriftlichen Nutzereingabe bereitgestellt. Die Nutzereingabe gibt der Benutzer an einer Bedienvorrichtung ein. In der beschriebenen Weise kann es nun zu dem Problem kommen, dass die Nutzereingabe kein Ganzwort, sondern nur ein Teilwort angibt, weil der Benutzer beispielsweise eine Eingabepause macht, also seine handschriftliche Nutzereingabe unterbricht. Dennoch soll eine Sprachansage zu dem bis dahin eingegebenen Teilwort möglich sein. Hierzu wird gemäß dem Verfahren eine Liste von möglichen, durch die Nutzereingabe eingebbaren Ganzworten, also vollständigen Worten, zusammen mit der jeweiligen klanglichen oder phonetischen Transkription bereitgestellt. Die Transkription beschreibt, welche Lautfolge in der Sprachansage zu erzeugen ist, um das Ganzwort verbal oder akustisch wiederzugeben. Bei einem oder einigen oder jedem der eingebbaren Ganzworte wird dann jeweils von dessen Ende her einmal oder wiederholt ein vorbestimmtes Wortende gemäß einer vorbestimmten Verkürzungsregel entfernt. Das Wortende kann also einen Buchstaben oder eine Buchstabenfolge umfassen. Von dem Ganzwort wird also von hinten oder vom Ende her zumindest einmal ein Wortende abgeschnitten oder entfernt. Das Wortende umfasst ein oder mehrere Zeichen des Ganzwortes, sodass also das Ganzwort um das Wortende verkürzt wird. Hierdurch entsteht jeweils ein neues Teilwort, nämlich das um das Wortende verkürzte Ganzwort. Nun ist die Frage, wie man dieses verkürzte Ganzwort, also das nun unvollständige Ganzwort, ausspricht. Entsprechend wird korrespondierend zu dem jeweils verkürzten Ganzwort mittels einer vorbestimmten Zuordnungsvorschrift ein dem entfernten Wortende entsprechendes Transkriptionsende ermittelt und von der korrespondierenden Transkription des Ganzwortes entfernt, wodurch also jedes Mal nicht nur ein Teilwort (d.h. ein Ganzwort, von dem einmal oder mehrmals ein jeweiliges Wortende entfernt wurde) und eine zugehörige Teiltranskription (vollständige Transkription, von der einmal oder mehrmals das zum entfernten Wortende entsprechende Transkriptionsende entfernt wurde) erzeugt. Das so erzeugte Teilwort und die zugehörige Teiltranskription werden der besagten Liste hinzugefügt. Die Liste wird also automatisiert um Teilworte (unvollständige Worte) und eine zugehörige Transkription ergänzt.

Somit kann also gemäß dem Verfahren auch eine Sprachansage als Rückmeldung zu einer handschriftlichen Nutzereingabe erzeugt werden, die lediglich ein teilweise geschriebenes Ganzwort, das heißt also ein Teilwort, umfasst. In der Liste ist hierzu eine entsprechende Teiltranskription nun vorhanden. Zudem ist die Suche nach dem Teilwort in der Liste erfolgreich, da in der Liste ein ausdrücklicher oder eigener Eintrag zu dem Teilwort vorhanden ist.

Durch die Erfindung ergibt sich der Vorteil, dass auch zu einer unvollständigen handschriftlichen Nutzereingabe (lediglich teilweise geschriebenes Ganzwort) eine Sprachansage als Rückmeldung bereitgestellt wird.

Die Erfindung umfasst auch Ausführungsformen, durch die sich zusätzliche Vorteile ergeben.

In einer Ausführungsform wird, während der Benutzer durch die Nutzereingabe eines der Ganzworte erst teilweise eingegeben hat, sodass eines der Teilworte eingegeben ist, in Abhängigkeit von dem eingegebenen Teilwort aus der Liste die zugehörige Teiltranskription herausgesucht und die Sprachansage zu dem Teilwort auf der Grundlage der Teiltranskription erzeugt. Es muss somit für die Sprachansage nicht explizit beispielsweise durch eine Bedienperson in der Liste das Teilwort und dessen Teiltranskription eingegeben worden sein, sondern es reicht hier eine Liste der Ganzworte und deren Transkription. Durch das Verfahren wird die Liste automatisch in der beschriebenen Weise um die Teilworte und deren korrekte Teiltranskription ergänzt und diese Teiltranskription dann für die Sprachansage genutzt.

In einer Ausführungsform wird mittels der besagten Verkürzungsregel eine buchstabenweise Verkürzung des jeweiligen Wortes bewirkt. Somit entstehen so viele Teilworte, wie das Ganzwort Buchstaben hat. Dies entspricht dann allen Möglichkeiten, die ein Benutzer bei der handschriftlichen Eingabe als Teilwort möglicherweise erzeugen kann. Es ist somit in vorteilhafter Weise eine Sprachansage zu jedem Zustand der handschriftlichen Nutzereingabe während eines Ganzwortes ermöglicht.

In einer Ausführungsform sind mittels der besagten Zuordnungsvorschrift (Auffinden des entsprechenden Transkriptionsendes zu einem Wortende) für einige oder alle Zeichen, aus denen die möglichen Ganzworte gebildet sind, jeweils ein korrespondierendes Transkriptionszeichen oder eine korrespondierende Transkriptionszeichenfolge zugeordnet. Dies ist notwendig, da nicht jedem einzelnen Buchstaben genau ein einzelnes Transkriptionszeichen entsprechen muss. Für jeden im Ganzwort an dessen Ende entfernten Buchstaben (wobei das Entfernen einmal oder mehrfach geschehen kann) wird also das zugehörige Transkriptionszeichen oder eine korrespondierende Transkriptionszeichenfolge zugeordnet und diese dann als Transkriptionsende von der korrespondierenden Transkription entfernt. Hierdurch ergibt sich der Vorteil, dass auch dann eine korrekte Teiltranskription erreicht ist, wenn zu einem einzelnen Buchstaben des Ganzwortes die zugehörige Transkription mehrere Transkriptionszeichen vorsieht. Dies kann beispielsweise bei dem Buchstaben "b" der Fall sein, der in einer Transkription repräsentiert sein kann durch die Transkriptionszeichen "2b". Zudem kann auch anhand eines Kontextes erkannt werden, ob überhaupt ein Transkriptionszeichen zu entfernen ist, sodass bei dieser Ausführungsform vorgesehen sein kann, dass mittels der Zuordnungsvorschrift kein Transkriptionszeichen zugeordnet ist. So ist beispielsweise die Buchstabenfolge "tt" repräsentiert durch die Transkriptionszeichenfolge ".t". Wird dann durch eine buchstabenweise Verkürzung ein "t" entfernt, sodass "t" übrig bleibt, so darf die Transkriptionszeichenfolge ".t" nicht ebenfalls entfernt werden, da sie noch weiterhin das verbleibende Zeichen "t" repräsentiert. Die Zuordnungsvorschrift kann in vorteilhafter Weise somit sprachliche Eigenarten repräsentieren oder berücksichtigen.

In einer Ausführungsform wird die besagte Liste als eigenständige Look-up-Tabelle (LUT) in einem Speicher der Bedienvorrichtung bereitgestellt. Hierdurch ergibt sich der Vorteil, dass eine Suche von Teilworten und deren Teiltranskription unabhängig von einer Datenbank durchgeführt werden kann, in welcher die ursprünglich bereitgestellte Liste gespeichert ist. Dies verhindert eine Belastung der Datenbank beim Betrieb der Bedienvorrichtung. Eine Look-up-Tabelle für eine Liste, die eine Zuordnung von Ganzworten und Teilworten zu einer korrespondierenden Transkription und Teiltranskription vorsieht, kann mit einem kleinere Datenvolumen als die Navigationsdatenbank 24, aus welcher die ursprünglichen Liste entnommen wurde, realisiert werden, sodass eine entsprechend schnelle und/oder resourcenarme Suche möglich ist.

In einer Ausführungsform wird die Liste der möglichen Ganzworte aus einer Navigationsdatenbank extrahiert. Somit kann also eine Sprachansage zu Datenbankeinträgen einer Navigationsdatenbank durchgeführt werden. Hierbei erfolgt dann mittels des Verfahrens eine automatisierte Vervollständigung, um die möglichen Teilworte, die bei einer handschriftlichen Nutzereingabe aufgrund einer Eingabeunterbrechung oder Eingabepause entstehen können.

Besonders vorteilhaft ist die Nutzung des Verfahrens in einer Bedienvorrichtung in einem Kraftfahrzeug. Die Bedienvorrichtung wird also in einem Kraftfahrzeug betrieben. Hier kann es bei einer handschriftlichen Nutzereingabe zu einer Eingabepause kommen, weil ein Benutzer des Kraftfahrzeugs sich beispielsweise auf den Straßenverkehr konzentrieren muss und deshalb eine Eingabepause einlegt.

Zum Durchführen des Verfahrens sind durch die Erfindung auch eine Bedienvorrichtung mit einer Eingabeeinrichtung zum Empfangen einer handschriftlichen Nutzereingabe, einer Ausgabeeinrichtung zum Ausgeben einer Sprachansage und eine Prozessoreinrichtung bereitgestellt. Die handschriftliche Nutzereingabe kann durch die Eingabeeinrichtung beispielsweise über ein Touchpad oder einen Touchscreen empfangen werden. Eine Ausgabeeinrichtung zum Ausgeben der Sprachansage kann beispielsweise auf einem an sich aus dem Stand der Technik bekannten TTS-System basieren. Die Prozessoreinrichtung ist dazu eingerichtet, eine Ausführungsform des erfindungsgemäßen Verfahrens durchzuführen. Die Prozessoreinrichtung kann hierzu zumindest einen Mikrokontroller und/oder zumindest einen Mikroprozessor umfassen. Die Prozessoreinrichtung kann einen Programmcode aufweisen, der Programminstruktionen enthält, die dazu eingerichtet sind, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

In einer Ausführungsform ist die Bedieneinrichtung dazu eingerichtet, während der Nutzereingabe eine Eingabepause zu erkennen. Dies kann beispielsweise dadurch realisiert sein, dass erkannt wird, dass eine Veränderung der Nutzereingabe, also beispielsweise eine Veränderung einer durch den Benutzer gezeichneten Linie, für eine vorbestimmte Mindestzeitdauer (beispielsweise in einem Bereich von 0,5 Sekunden bis 5 Sekunden) unverändert bleibt und/oder eine auf die Eingabeeinrichtung wirkende Kraft kleiner als ein vorbestimmter Schwellenwert wird. Die Bedienvorrichtung ist des Weiteren dazu eingerichtet, bei erkannter Eingabepause ein bis dahin über die Eingabeeinrichtung empfangenes Teilwort mittels der Ausgabeeinrichtung als Sprachansage auszugeben. Die hierzu nötige Teiltranskription des Teilworts kann in der beschriebenen Weise um die Teilworte und deren Teiltranskription ergänzte Liste bereitgestellt werden.

Durch die Erfindung ist auch ein Kraftfahrzeug bereitgestellt, das eine Ausführungsform der erfindungsgemäßen Bedienvorrichtung aufweist. Das erfindungsgemäße Kraftfahrzeug ist bevorzugt als Kraftwagen, insbesondere als Personenkraftwagen oder Lastkraftwagen ausgestaltet. In der beschriebenen Weise kommt es insbesondere in einem Kraftfahrzeug mit hoher Wahrscheinlichkeit zu einer Eingabepause bei einer handschriftlichen Nutzereingabe. Hier ist die Durchführung des erfindungsgemäßen Verfahrens daher besonders vorteilhaft.

Die Erfindung umfasst auch die Kombinationen der Merkmale der beschriebenen Ausführungsformen.

Im Folgenden sind Ausführungsbeispiele der Erfindung beschrieben. Hierzu zeigt die einzige Figur:
- Fig.: eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

Die Figur zeigt ein Kraftfahrzeug 10, bei dem es sich um einen Kraftwagen, insbesondere einen Personenkraftwagen oder Lastkraftwagen, handeln kann. Anstelle des Kraftfahrzeugs 10 kann allerdings auch ein anderes Gerät, beispielsweise ein Smartphone oder ein Tablet-PC vorgesehen sein. Im Folgenden wird lediglich der Anschaulichkeit halber von einem Kraftfahrzeug ausgegangen.

In dem Kraftfahrzeug 10 kann eine Eingabeeinrichtung 11 zum Eingeben oder Empfangen einer handschriftlichen Nutzereingabe 12 vorgesehen sein. Eine Handschrifterkennungseinrichtung 13 (HWR) kann anhand der Nutzereingabe 12 ein eingegebenes Wort 14 erkennen. Das Wort 14 kann ein Ganzwort oder, wie in der Figur dargestellt, ein eingegebenes Teilwort 15 sein. Das beispielhaft dargestellte Teilwort "Berl" kann der Beginn des Ganzwortes "Berlin" sein. Allgemein ist ein Ganzwort ein vollständiges Wort, ein Teilwort ein unvollständiges Wort. Es kann vorgesehen sein, dass bei Erkennen einer Eingabepause, wenn der Benutzer an der Eingabeeinrichtung 11 seine Benutzereingabe z.B. für eine vorbestimmte Mindestzeitdauer unterbricht, dennoch das bereits eingegebene Teilwort 15 mittels einer Ausgabeeinrichtung 16 als Sprachansage 17 beispielsweise mittels einer Lautsprechereinrichtung 18 der Ausgabeeinrichtung 16 dem Benutzer ausgegeben wird, damit dieser hören kann, was er bisher geschrieben hat oder was bisher erkannt wurde. Die Umwandlung in die Sprachansage 17 kann in an sich bekannter Weise mittels eines Sprachsynthesesystems 19 (TTS-System) erfolgen.

Das Sprachsynthesesystem 19 benötigt aber für das Erzeugen der Sprachansage 17 eine phonetische Transkription 20, welche die Lautfolge beschreibt, die das erkannte Wort 14 darstellt. Im Falle eines Teilwortes 15 ist eine Transkription 20 notwendig, die hier als Teiltranskription 21 bezeichnet ist, weil es ich um die Transkription eines Teilwortes, also eines unvollständigen Wortes, handelt. Das Sprachsynthesesystem 19 kann zusätzlich oder alternativ dazu eingerichtet sein, sich die Transkriptionen der Ganzworte 23 selbst zu ermitteln. Dies ist beispielsweise bekannt, wenn man Nachrichten (News) oder SMS-Nachrichten (SMS - Short message Service) per Sprachausgabe ausgeben möchte. Ein Nachteil ist aber, dass diese interne Generierung der Transkription in der Regel schlechter / ungenauer ist, als wenn man sich einer vorhandenen Transkription von außen (Navigationsdatenbank) bedient. Daher dient das Verfahren auch dem Anspruch, die möglichst beste Qualität von der TTS erzeugen zu lassen.

Um diese Teiltranskription zu erhalten, ist folgendes vorgesehen:
Eine Liste 22 der vom Benutzer möglichen eingebbaren Ganzworte 23 kann beispielsweise aus einer Navigationsdatenbank 24 (NavDB) entnommen werden. Aus dieser Navigationsdatenbank 24 kann zu jedem Ganzwort 23 auch eine zugehörige Transkription 25, also eine Ganzwort-Transkription entnommen werden, sodass die Liste 22 zu jedem Ganzwort 23 eine Transkription 25 umfasst. Die Liste 22 kann mehr als die dargestellten drei Ganzworte enthalten, was durch Auslassungspunkte 26 ("...") symbolisiert ist.

Zu jedem oder einigen oder einem Ganzwort 23 kann dann folgendes vorgesehen sein. In der Fig. ist dies am Beispiel des Ganzwortes "Berlin" veranschaulicht. Von einem Wortende 27 des Ganzwortes 23 kann nacheinander jeweils ein vorbestimmtes Wortende 28 entfernt werden. Die Folge der Wortenden 28 kann beispielsweise einem buchstabenweisen Verkürzen des Ganzwortes 23 entsprechen. Die zu dem Ganzwort 23 gehörige oder zugeordnete Transkription 25 muss nun ebenfalls gekürzt werden. Hierbei entspricht aber nicht jedem Buchstaben des Ganzwortes 23 auch ein einzelnes Transkriptionszeichen der Transkription 25. Daher kann eine Zuordnungsvorschrift 29 vorgesehen sein, die jedem Buchstaben oder allgemein jedem möglichen Wortende C ein korrespondierendes Transkriptionszeichen oder eine korrespondierende Transkriptionszeichenfolge S (z.B. "i:") zuordnet.

Von der Transkription 25 des Ganzwortes 23 kann also nun entsprechend dem entfernten Wortende 28 ein entsprechendes Transkriptionsende 31' aus der Zuordnungsvorschrift 29 gebildet und von der Transkription 25 entfernt werden. Somit ergibt sich zu dem jeweils verbliebenen Teilwort 28' eine zugehörige Teiltranskription 25'. Beim Entfernen von Wortenden 28 kann mit jedem Schritt des Entfernen immer wieder vom Ganzwort 23 ausgegangen werden und dieses um ein immer längeres Wortende gekürzt werden (wie in der Figur dargestellt), oder es kann mit jedem Schritt des Entfernens von Teilwort 28' aus dem vorangegangenen Schritt ausgegangen werden. Beide Vorgehensweisen sind gleichwertig.

Diese kann zusammen mit den möglichen Ganzworten 23 in einer erweiterten Liste 30 gespeichert werden, die als Look-up-Tabelle (LUT) ausgestaltet sein kann und in einem Speicher 31 der Bedienvorrichtung B gespeichert sein kann.

In dem Kraftfahrzeug 10 kann eine Bedienvorrichtung B bereitgestellt sein, mittels welcher ein Benutzer beispielsweise zum Eingeben eines Navigationsziels in einem Navigationssystem oder eine Navigationsassistenz handschriftlich eine Nutzereingabe 12 durchführen kann.

Wird nun die Nutzereingabe 12 empfangen und das erkannte Wort 14 liegt vor, so kann für die Sprachansage 17 in der erweiterten Liste 30 überprüft werden, ob das erkannte Teilwort 15 darin enthalten ist. Bei negativem Suchergebnis 32 kann das Teilwort 15 als eine Buchstabierung 33 mittels der Sprachsynthese des Sprachsynthesesystems 19 ausgegeben werden. Bei erfolgreichem Suchergebnis 32', wenn also in der Liste 30 das Teilwort 15 erkannt wird, kann die zugehörige Teiltranskription 21 aus der Liste 30 ausgelesen werden und dem Sprachsynthesesystem 19 zur Verfügung gestellt werden. Diese kann dann auf Grundlage der Teiltranskription 21 die Sprachansage 17 erzeugen. Der Benutzer hört also bei Einlegen einer Eingabepause das bisher geschriebene oder eingegebene Teilwort 15.

Im Folgenden ist eine besonders bevorzugte Ausführungsform im Zusammenhang mit einem Kraftfahrzeug 10 und einer Navigationsdatenbank 24 beschrieben.

Das TTS-System (Sprachsynthesesystem 19) wird also mit einer Look-up-Tabelle LUT verknüpft, welche als Schlüssel alle möglichen orthographischen Varianten von Straßen- und Ortsnamen enthält, und als Werte die entsprechenden Transkriptionen eben dieser Variationen, also die Teiltranskriptionen 21.

Die (Ganzwort-) Orthographien und Transkriptionen werden im Vorfeld aus der Navigationsdatenbank 24 extrahiert und in der Look-up-Table LUT gespeichert. Diese LUT kann dann während der Laufzeit an das TTS-System gekoppelt werden. Durch diese Auslagerung der für die TTS relevanten Daten (Worte und Transkription) aus der Navigationsdatenbank 24 heraus zu einer eigenen TTS-Ressource (Liste 30) ist das Problem der Zugriffszeit eliminiert.

Eine direkte Übernahme der Informationen aus der Navigationsdatenbank 24 würde jedoch das Problem der Aussprachen bei unvollständigen Adresseingaben wie "Frankfu" (für Frankfurt) oder "chaus" (für Chaussee) nicht lösen.

Daher werden die Orthographien und Transkriptionen aus der Navigationsdatenbank 24 noch weiterverarbeitet.

Über einen heuristischen Algorithmus (Zuordnungsvorschrift 29) ist es möglich, die Orthographien synchron mit den zugehörigen Transkriptionen in Einzelteile oder Teilworte 28' zu zerlegen. Dies kann beispielsweise auf Silbenbasis, oder auf Zeichenbasis erfolgen.

Diese Zerlegung der Orthographien und Transkriptionen findet schließlich für alle Einträge der Navigationsdatenbank 24 statt. Die Resultate werden in die LUT, d.h. die ergänzte Liste 30, aufgenommen und stehen dann zum performanten Abruf durch das TTS-System bereit.

Durch diese Methode kann zu jeder Teilwort-Eingabe eines Benutzers im Bereich der Adress-Eingabe z.B. mittels Touchscreen eine korrekte akustische Bestätigung erzielt werden. Durch die enge Anbindung der LUT stehen die zugrundeliegenden Daten nahezu verzögerungsfrei zur Nutzung bereit. Insbesondere kann mit der Methode auch mit unvollständige Eingaben zuverlässig umgegangen werden, da für alle Varianten eine phonetische Transkription in der LUT abgelegt ist.

Die Zerlegung erfolgt auf Grundlage des heuristischer Algorithmus, wie er durch die Zuordnungsvorschrift 29 realisiert ist, und kann verschiedene Ausprägungen annehmen. Sinnvolle Möglichkeiten sind beispielsweise die Zerlegung auf Silben- oder auf Zeichenbasis als Verkürzungsregel.

Am Beispiel des Ganzworts "Westerbüttel" kann die Verkürzung mit der Verkürzungsregel "Buchstabenweise" wie folgt aussehen:

| **Orthographie** | **Transkription** |
|---|---|
| Westerbüttel | 'vEs.t$R.'2bY.t$I |
| Westerbütte | 'vEs.t$R.'2bY.t$ |
| Westerbütt | 'vEs.t$R.'2bY.t |
| Westerbüt | 'vEs.t$R.'2bY.t |
| Westerbü | 'vEs.t$R.'2bY |
| Weste rb | 'vEs.t$R.'2b |
| Wester | 'vEs.t$R |
| Weste | 'vEs.t$ |
| West | 'vEs.t |
| Wes | 'vEs |
| We | 'vE |

Aus der Navigationsdatenbank 24 ist lediglich der erste Ganzwort-Eintrag "Westerbüttel" mit seiner Transkription "'vEs.t$R.'2bY.t$I" extrahierbar. Alle weiteren Einträge werden dann durch den Algorithmus erzeugt. In der dargestellten Variante wird der Ort "Westerbüttel" rückwärts um je ein Zeichen oder einen Buchstaben verkürzt. Selbige Verkürzung wird bei der Transkription vorgenommen.

Hierbei ist jedoch eine 1:1-Kürzung nicht immer möglich. Beispielsweise lautet die Transkription zu "Holzchaussee" wie folgt: "'hOlt&s.SO.'2se:". Alleine die Transkription des Buchstaben "z" ist hier gegeben mit "t&s". Analog dafür wären in diesem Beispiel die Kombinationen "ch" <-> "S" und "au" <-> "O" schwierig und müssen vom Algorithmus entsprechend verarbeitet werden.

Die Anwendung ist grundsätzlich auf alle phonetischen Alphabete anwendbar, erfordert dafür jedoch Anpassungen in der Heuristik (Zuordnungsvorschrift 29).

Insgesamt zeigen die Beispiele, wie durch die Erfindung Teil-Transkriptionen zur Qualitätssteigerung der TTS-Synthese (TTS - Text-to-Speech, Text-zu-Sprache) im Bereich der Handschrifterkennung bereitgestellt werden kann.

## Patentansprüche

1. Verfahren zum Erzeugen einer Sprachansage (17) als Rückmeldung zu einer handschriftlichen Nutzereingabe (12), die ein Benutzer an einer Bedienvorrichtung (B) eingibt, wobei
- eine Liste (22) von möglichen, durch die Nutzereingabe (12) eingebbaren Ganzworten (23) zusammen mit einer jeweiligen phonetischen Transkription (25) bereitgestellt wird,
- bei einem oder einigen oder jedem der eingebbaren Ganzworte (23) jeweils:
- von dessen Ende (27) her einmal oder wiederholt ein vorbestimmtes Wortende (28), das ein oder mehrere Zeichen des Ganzwortes (23) umfasst, gemäß einer vorbestimmten Verkürzungsregel entfernt wird und korrespondierend dazu mittels einer vorbestimmten Zuordnungsvorschrift (29) ein dem entfernten Wortende (28) entsprechendes Transkriptionsende (31') ermittelt und von der korrespondierenden Transkription (25) des Ganzwortes (23) entfernt wird, wodurch jedes Mal ein Teilwort (28') und eine zugehörige Teiltranskription (25') erzeugt werden, und das Teilwort (28') und die Teiltranskription (25') der Liste (30) hinzugefügt werden.

2. Verfahren nach Anspruch 1, wobei während der Benutzer durch die Nutzereingabe (12) eines der Ganzworte (23) erst teilweise eingegeben hat, sodass eines der Teilworte (15) eingegeben ist, in Abhängigkeit von dem eingegebenen Teilwort (15) aus der Liste (30) die zugehörige Teiltranskription (21) herausgesucht und die Sprachansage (17) zu dem Teilwort (15) auf der Grundlage der Teiltranskription (21) erzeugt wird.

3. Verfahren nach einem der vorhergehenden Ansprüche, wobei mittels der Verkürzungsregel eine buchstabenweise Verkürzung des jeweiligen Wortes bewirkt wird.

4. Verfahren nach einem der vorhergehenden Ansprüche, wobei mittels der Zuordnungsvorschrift (29) für einige oder alle Zeichen (C), aus denen die möglichen Ganzworte (23) gebildet sind, jeweils ein korrespondierendes Transkriptionszeichen (S) oder eine korrespondierende Transkriptionszeichenfolge oder kein Transkriptionszeichen zugeordnet wird.

5. Verfahren nach einem der vorhergehenden Ansprüche, wobei die Liste (30) als eigenständige Look-up-Tabelle (LUT) in einem Speicher (31) der Bedienvorrichtung (B) bereitgestellt wird.

6. Verfahren nach einem der vorhergehenden Ansprüche, wobei die bereitgestellte Liste (22) der möglichen Ganzworte (23) aus einer Navigationsdatenbank (24) extrahiert wird.

7. Verfahren nach einem der vorhergehenden Ansprüche, wobei die Bedienvorrichtung (B) in einem Kraftfahrzeug (10) betrieben wird.

8. Bedienvorrichtung (B) mit einer Eingabeeinrichtung (11) zum Empfangen einer handschriftlichen Nutzereingabe (12), einer Ausgabeeinrichtung (16) zum Ausgeben einer Sprachansage (17) und einer Prozessoreinrichtung, die dazu eingerichtet ist, ein Verfahren nach einem der vorhergehenden Ansprüche durchzuführen.

9. Bedienvorrichtung (B) nach Anspruch 8, wobei die Bedienvorrichtung (B) dazu eingerichtet ist, eine Eingabepause der Nutzereingabe (12) zu erkennen und bei erkannter Eingabepause ein bis dahin über die Eingabeeinrichtung (11) empfangenes Teilwort (15) mittels der Ausgabeeinrichtung (16) als Sprachansage (17) auszugeben.

10. Kraftfahrzeug (10) mit einer Bedienvorrichtung (B) nach Anspruch 8 oder 9.

## Claims

1. Method for generating a voice announcement (17) as feedback to a handwritten user input (12), which a user enters on a control device (B), wherein
- a list (22) of possible whole words (23), which can be entered by the user input (12), is provided together with a corresponding phonetic transcription (25),
- in the case of one or some or each of the whole words (23), which can be input, in each case:
- a predetermined word end (28), which comprises one or more characters of the whole word (23), is removed from the end (27) of said word once or repeatedly in accordance with a predetermined shortening rule and corresponding to this, a transcription end (31') corresponding to the removed word end (28) is determined by means of a predetermined assignment rule (29) and is removed from the corresponding transcription (25) of the whole word (23), as a result of which a part word (28') and an associated part transcription (25') are generated each time and the part word (28') and the part transcription (25') are added to the list (30).

2. Method according to claim 1, wherein when the user has only partially entered one of the whole words (23) by means of the user input (12), such that one of the part words (15) is input, depending on the part word (15) input, the associated part transcription (21) is selected from the list (30) and the voice announcement (17) for the part word (15) is generated on the basis of the part transcription (21).

3. Method according to any of the preceding claims, wherein a letter-by-letter shortening of the particular word is performed by means of the shortening rule.

4. Method according to any of the preceding claims, wherein, for some or all characters (C), from which the possible whole words (23) are formed, a corresponding transcription character (S) or a corresponding transcription character string or no transcription character is assigned in each case, by means of the assignment rule (29).

5. Method according to any of the preceding claims, wherein the list (30) is provided as a separate lookup table (LUT) in a memory (31) of the control device (B).

6. Method according to any of the preceding claims, wherein the list (22) of possible whole words (23) provided is extracted from a navigation database (24).

7. Method according to any of the preceding claims, wherein the control device (B) is operated in a motor vehicle (10).

8. Control device (B) with an input device (11) for receiving a handwritten user input (12), an output device (16) for outputting a voice announcement (17) and a processor device, which is designed to implement a method according to any of the preceding claims.

9. Control device (B) according to claim 8, wherein the control device (B) is designed to detect an input break in the user input (12) and, on detecting an input break, to output a part word (15) received up to that point via the input device (11) as a voice announcement (17) by means of the output device (16).

10. Motor vehicle (10) with a control device (B) according to claim 8 or 9.

## Revendications

1. Procédé permettant de générer une annonce vocale (17) en réaction à une entrée d'utilisateur (12) manuscrite qu'un utilisateur entre au niveau d'un dispositif de service (B), dans lequel
- une liste (22) de mots entiers (23) possibles qui peuvent être entrés grâce à l'entrée d'utilisateur (12) est fournie en même temps qu'une transcription phonétique (25) respective,
- pour respectivement un ou plusieurs ou chacun des mots entiers (23) pouvant être entrés :
- à partir de la fin (27) de ceux-ci et de manière unique ou répétée, une fin de mot (28) prédéterminée comprenant un ou plusieurs caractères du mot entier (23) est supprimée conformément à une règle de raccourcissement prédéterminée et, de manière correspondante, une fin de transcription (31') correspondant à la fin de mot (28) supprimée est déterminée au moyen d'un protocole d'affectation (29) prédéterminé et est supprimée de la transcription (25) correspondante du mot entier (23), ce qui fait qu'un mot partiel (28') et une transcription partielle (25') associée sont à chaque fois générés et que le mot partiel (28') et la transcription partielle (25') sont ajoutés à la liste (30).

2. Procédé selon la revendication 1, dans lequel, alors que l'utilisateur n'a entré que partiellement l'un des mots entiers (23) grâce à l'entrée d'utilisateur (12), de sorte qu'un des mots partiels (15) est entré, la transcription partielle (21) associée est sélectionnée dans la liste (30) en fonction du mot partiel (15) entré et l'annonce vocale (17) pour le mot partiel (15) est générée sur la base de la transcription partielle (21).

3. Procédé selon l'une quelconque des revendications précédentes, dans lequel un raccourcissement lettre par lettre du mot respectif est provoqué au moyen de la règle de raccourcissement.

4. Procédé selon l'une quelconque des revendications précédentes, dans lequel respectivement un caractère de transcription (S) correspondant ou une séquence de caractères correspondante est affecté(e), ou aucun caractère de transcription n'est affecté, au moyen du protocole d'affectation (29) pour certains, ou la totalité, des caractères (C) à partir desquels les mots entiers (23) possibles sont formés.

5. Procédé selon l'une quelconque des revendications précédentes, dans lequel la liste (30) est fournie sous forme de table de consultation (LUT) indépendante au sein d'une mémoire (31) du dispositif de service (B).

6. Procédé selon l'une quelconque des revendications précédentes, dans lequel la liste (22) fournie des mots entiers (23) possibles est extraite d'une base de données de navigation (24).

7. Procédé selon l'une quelconque des revendications précédentes, dans lequel le dispositif de service (B) est mis en fonction dans un véhicule automobile (10).

8. Dispositif de service (B) avec un dispositif d'entrée (11) permettant de recevoir une entrée d'utilisateur (12) manuscrite, un dispositif de sortie (16) permettant de diffuser une annonce vocale (17) et un dispositif formant processeur conçu pour mettre en œuvre un procédé selon l'une quelconque des revendications précédentes.

9. Dispositif de service (B) selon la revendication 8, dans lequel le dispositif de service (B) est conçu pour reconnaître une pause d'entrée dans l'entrée d'utilisateur (12) et, lorsqu'une pause d'entrée est détectée, diffuser sous forme d'annonce vocale (17) au moyen du dispositif de sortie (16) un mot partiel (15) reçu jusque-là par l'intermédiaire du dispositif d'entrée (11).

10. Véhicule automobile (10) avec un dispositif de service (B) selon la revendication 8 ou 9.
